# EUROPEAN PATENT APPLICATION

(11) **EP 1 642 766 A1**
(43) Date of publication of application: **05.04.2006**
(21) Application number: 05425399.2
(22) Date of filing: 31.05.2005
(51) Int. Cl.: B60P 1/28, B62D 33/04, B62D 27/00

(54) **A body for industrial vehicles**

(30) Priority: 30.09.2004 IT VR20040152
(71) Applicant: Drago S.r.l., 46035 Ostiglia (Mantova) (IT)
(72) Inventor: Franceschetti, Marco, 46035 Ostiglia (Mantova) (IT)
(74) Representative: Ponchiroli, Simone

(57) **Abstract**

A body for industrial vehicles comprises at least five main parts: a base (2), two side walls (3), a front wall (4) and a rear wall (5) forming a body (1) internal volume (6). One or more of the main parts, preferably all, are connected to one another by screw in fixing means consisting of through-bolts. The base (2) has a first external flange (8) connected by through-bolts to a second flange (9) on each of the side walls. The rear wall (5) comprises a supporting structure (13) and a mobile structure (14) pivoting relative to the supporting structure (13). At the supporting structure (13), each side wall (3) has a seat (16) for holding the supporting structure (13).

## Description

The present invention relates to a body for industrial vehicles, in particular of the dump type.

Industrial vehicle bodies have five main parts: a base, two side walls, a front wall and a rear wall. In the case of dump bodies, the base is hinged to the vehicle chassis close to the rear wall, whilst a hydraulic actuator operates at the front wall or the base of the body to lift the body.

The rear wall has a portion that can be opened, the top of which pivots at the side walls.

To prevent accidental opening of the rear wall, there are means for locking the rear wall.

At present industrial vehicle bodies, whether fixed or of the dump type, consist of a single unit in which the different parts are welded together.

However, this technology has several disadvantages. The bodies are often installed not by the vehicle manufacturer but by specialised fitters. Moreover, the bodies are made by manufacturers who are neither the vehicle manufacturers nor the fitters.

As a result, the body manufacturers must supply the fitters with bodies that are ready to be mounted on the vehicle, since the fitters do not normally have sufficient equipment and skills to perform work on the bodies (welding, painting, etc.).

However, this need results in significant transport costs, because a lorry must be used to transport each body.

A second disadvantage of the bodies currently used is their relatively high weight, which increases the vehicle tare and consequently reduces its loading capacity.

The bodies are made of steel to guarantee mechanical strength.

In this situation the technical need which forms the basis of the present invention is to provide a body for industrial vehicles which overcomes the above-mentioned disadvantages.

In particular, the technical need of the present invention is to provide a body for industrial vehicles which can be transported in a condition with reduced dimensions, so that a larger number of bodies can be transported, the number of lorries being equal.

Another technical need of the present invention is to provide a body for industrial vehicles which is lighter than conventional bodies, but guarantees mechanical strength equal to that of conventional bodies.

The technical need specified and the aims indicated are substantially achieved by a body for industrial vehicles as described in the claims herein.

Further features and the advantages of the present invention are more clearly illustrated in the detailed description which follows, with reference to the accompanying drawings, which illustrate several preferred embodiments of a body for industrial vehicles, without limiting the scope of the inventive concept, in which:
- Figure 1 is an exploded front schematic axonometric view of a body for industrial vehicles made in accordance with the present invention;
- Figure 2 is a front schematic axonometric view of the body illustrated in Figure 1 seen from the opposite side;
- Figure 3 is a rear schematic axonometric view of the body illustrated in Figure 2;
- Figure 4 is a rear axonometric view of the outside of a side wall 3 of the body illustrated in Figure 1;
- Figure 5 is a front axonometric view, with some parts cut away, of the inside of the side wall 3 illustrated in Figure 4;
- Figure 6 is a cross-section of the wall illustrated in Figure 5;
- Figure 7 is a front schematic axonometric view, with some parts transparent, of the body illustrated in Figure 2 showing the locking means;
- Figure 8 is a schematic top view, with some parts transparent, of the body illustrated in Figure 7;
- Figure 9 is a schematic view, with some parts transparent, of the body illustrated in Figure 8 according to the line IX - IX, in an operating position;
- Figure 10 is a schematic view, with some parts transparent, of the body illustrated in Figure 9 in a home position;
- Figure 11 is a view of the body illustrated in Figure 9 according to the line XI - XI;
- Figure 12 is an exploded axonometric view of only the body locking means illustrated in Figure 7;
- Figures 13 to 15 are enlarged details from Figure 12;
- Figure 16 is a bottom rear axonometric view, with some parts transparent, of the body illustrated in Figure 7; and
- Figures 17 to 19 are enlarged details from Figure 16.

With reference to the accompanying drawings the numeral 1 denotes as a whole a body for industrial vehicles in accordance with the present invention.

The body 1 comprises at least five main parts, that is to say, a base 2, two side walls 3, a front wall 4 and a rear wall 5 which form a body 1 internal volume 6.

In accordance with the present invention, at least two of the main parts are connected to one another by screw in fixing means. However, all of the main parts are preferably connected to one another by screw in fixing means.

In the preferred embodiment the screw in fixing means consist of a plurality of through-bolts. In the accompanying drawings, for greater clarity, the holes 7 for insertion of the through-bolts are illustrated, but not the through-bolts themselves.

Moreover, advantageously, all of the through-bolts are arranged in such a way that they are completely outside the body 1 internal volume 6.

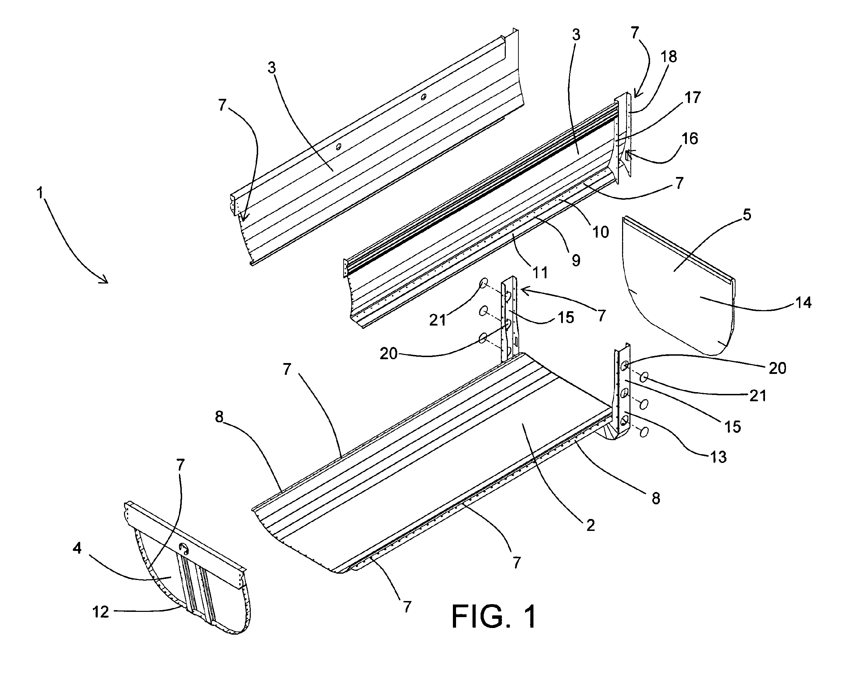

As illustrated in Figure 1, the base 2 is connected to each side wall 3 by through-bolts positioned along its side edges.

In particular, the base 2 has, at each side wall 3, has a first flange 8 extending towards the outside of the body 1. In turn, each side wall 3 has, at its lower portion connected to the base 2, a second flange 9 extending towards the outside of the body 1 and at least partly shaped to match the first flange 8. Each second flange 9 is connected to the corresponding first flange 8 by through-bolts.

Moreover, advantageously, to provide greater protection for the parts of the industrial vehicle located under the body 1, each second flange 9 has not only a first section 10 shaped to match the first flange 8, but a second section 11 extending cantilever style from the first section 10 even further outwards.

As illustrated in the accompanying drawings, both the first flange 8 and the first section 10 of the second flange 9 have a plurality of matching through-holes 7 for insertion of the bolts.

As regards fixing the front wall 4 to the base 2 and to the side walls 3, for example as illustrated in Figure 1, the front wall 4 has, at least at the base 2 and the side walls 3, at least one peripheral flange 12 substantially shaped to match the profile of the side walls 3 and the base 2. This peripheral flange 12 extends transversally to the main plane in which the front wall 4 extends, on the side of the latter toward the outside of the body 1.

Therefore, the front wall 4 is fixed to the side walls 3 and to the base 2, by a plurality of through-bolts extending through the through-holes 7 made in the peripheral flange 12 and in the front edge of the side walls 3 and the base 2.

In contrast, the rear wall 5 mainly consists of a supporting structure 13 and a mobile structure 14 pivoting relative to the supporting structure 13. In particular, the mobile structure 14 pivots relative to the upper part of the supporting structure 13, and can move between a first position, in which it is coplanar with the supporting structure 13 and closes the rear wall 5, and a second position, in which it is at an angle to the supporting structure 13 and allow material to pass through the rear wall 5. In the case of a dump body 1, movement of the mobile structure 14 is guaranteed, in the known way, simply by lifting the body 1 and by the weight of the mobile structure 14.

In the embodiment of the present invention illustrated, the supporting structure 13 is U-shaped, and the lower part of the U is connected to the base 2, whilst the arms of the U form two uprights 15 connected to the sides walls 3.

Advantageously, at the supporting structure 13, each side wall 3 has a seat 16 designed to hold the supporting structure 13 to guarantee greater body 1 strength.

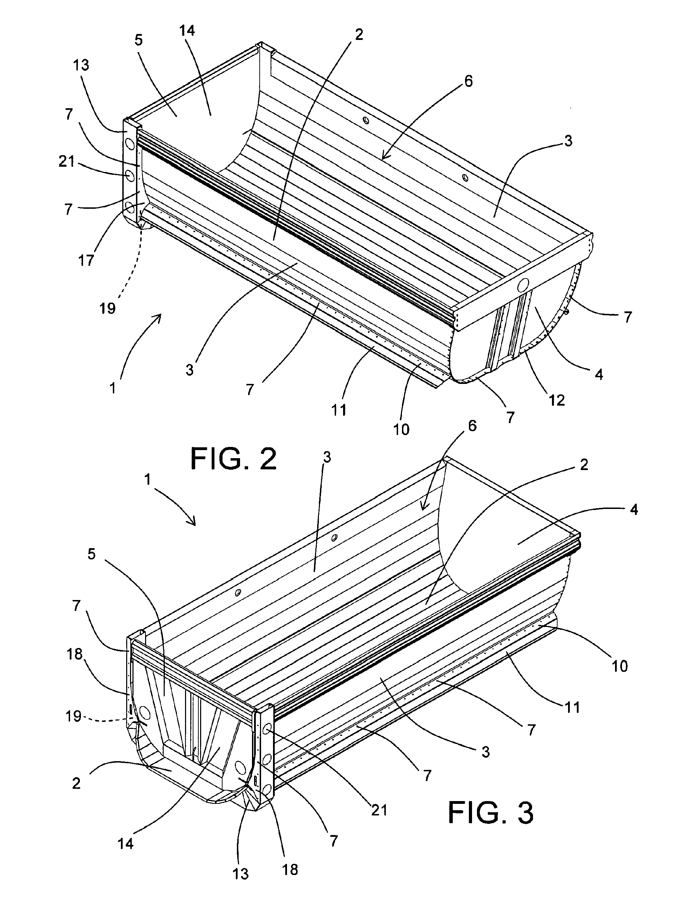

As illustrated in Figures 1 to 4, the seat 16 comprises a front flange 17 and a rear flange 18 integral with the side wall 3 and fixed to the latter transversally to its main direction of extension. The supporting structure 13 is at least partly inserted between the front flange 17 and the rear flange 18, which prevent it from moving forwards or backwards.

In particular, in the preferred embodiment, the seat 16 is made on the outside of the side wall 3 which in turn forms part of the seat 16. The seat 16 has three sides, two formed by the front and rear flanges 17, 18 and one by the side wall 3.

The flanges 17, 18 may be fixed to the side wall 3 in any way, for example by welding.

Therefore, in the preferred embodiment, at least at the side walls 3 to which it is connected, the U-shaped supporting structure 13 mainly extends on the outside of the side walls 3.

In addition, the U-shaped supporting structure 13 extends, at least mainly, under the base 2.

However, in other embodiments the seat 16 may be made on the inside of the side wall 3 and the base 2, similarly to the case in which it is made on the outside.

In the preferred embodiment illustrated in the accompanying drawings, the supporting structure 13 if fixed, by through-bolts, only to the side walls 3, but not to the base 2 which is only resting on it and which, to facilitate material unloading from the body 1, extends outside the rear wall 5 (Figure 3) .

In particular, the supporting structure 13 is fixed both to the front flange 17 and to the rear flange 18 which, like the supporting structure 13, have through-holes 7.

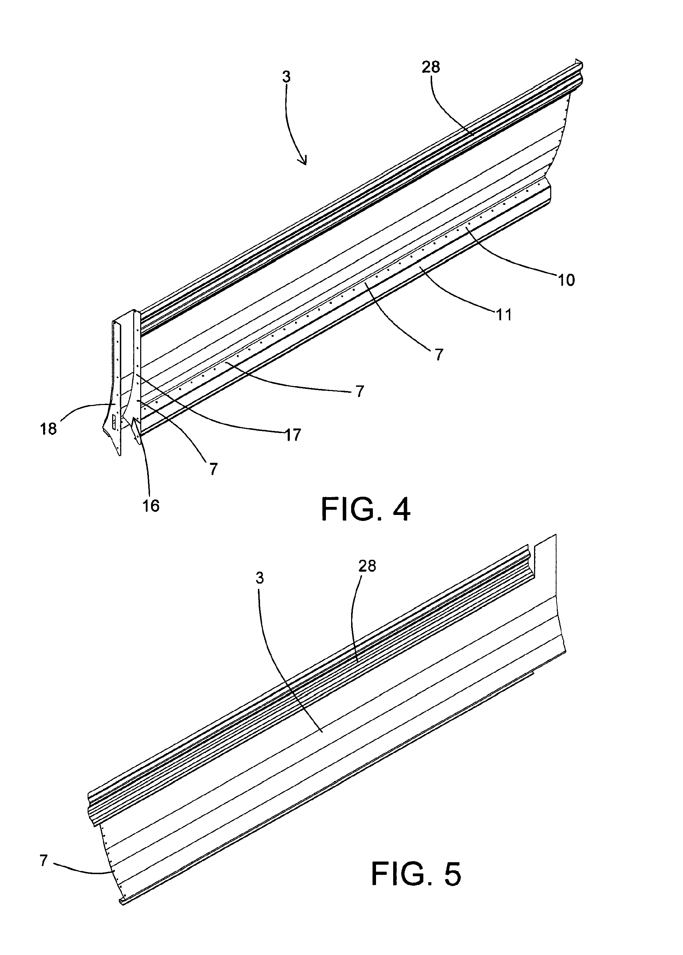

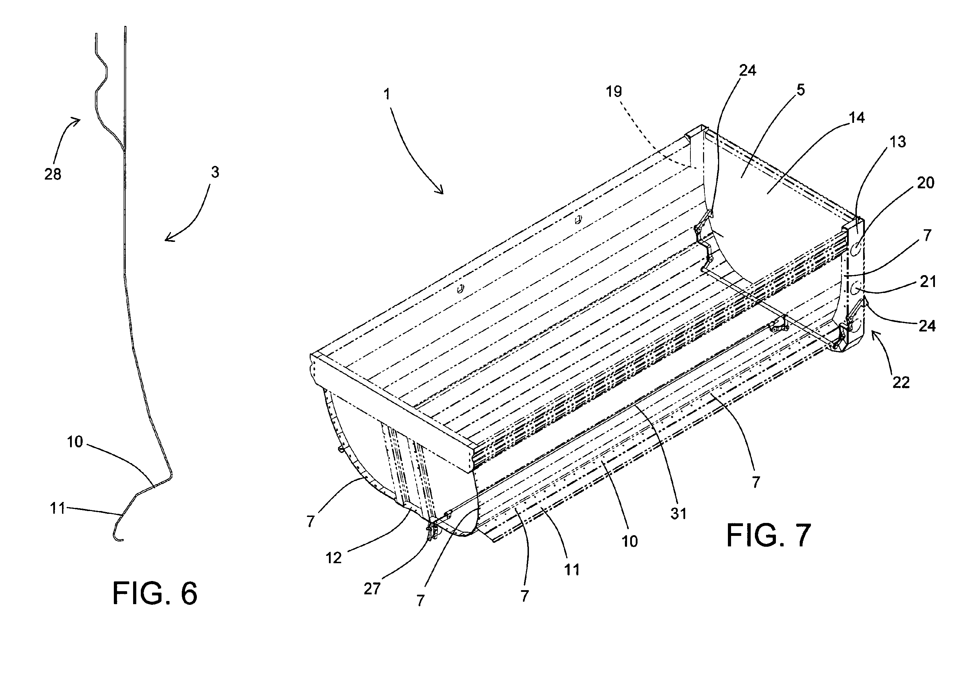

Figure 4 illustrates the complete side wall 3, with two flanges 17, 18, whilst Figure 5 and Figure 6 illustrate the side wall 3 without the two flanges 17, 18.

As illustrated in particular in Figure 1, in the preferred embodiment, the U shape of the supporting structure 13 is formed by a C-shaped plate, in which the open side faces the mobile structure 14. However, when the body 1 is assembled, the side walls 3 and the base 2, inserted between the supporting structure 13 and the mobile structure 14, close the open side of the supporting structure 13 in such a way that a compartment 19 is formed inside it, delimited by the supporting structure 13 and closed by the side walls 3 and by the base 2. However, in other embodiments, the compartment 19 may be completely closed by the supporting structure 13.

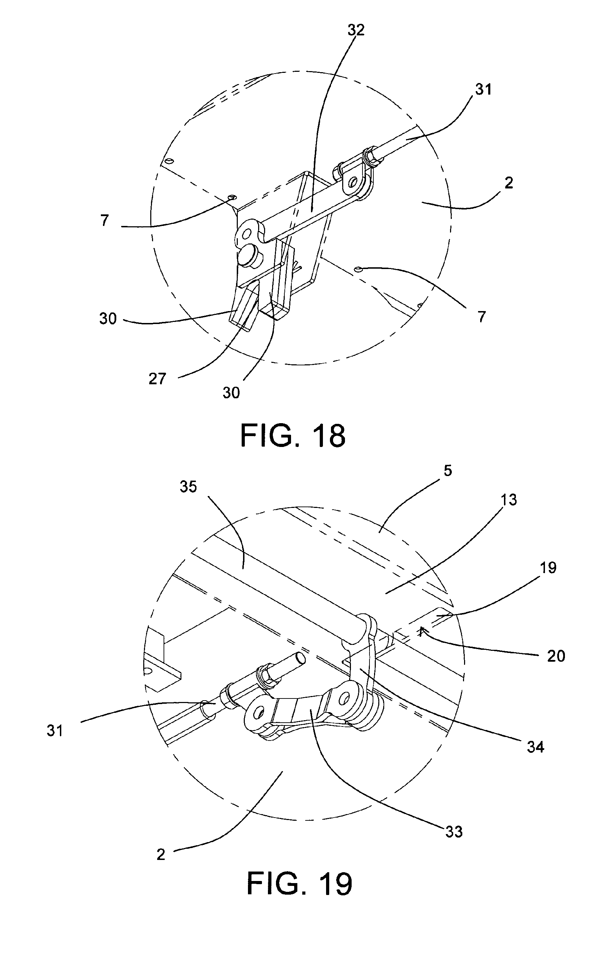

In addition, the supporting structure 13 has one or more openings 20 providing access to the compartment 19. Said openings 20 may be either open, like the one made at the base 2 (Figure 19), or protected by a covering element 21, like the three made at each side wall 3.

As illustrated in Figure 6, according to the preferred embodiment of the present invention, the side walls 3 mainly consist of a single shaped plate. In this way, the upper part 28 of each side wall may have stiffening profiling.

To limit the overall weight of the body 1 it is also preferable that the side walls 3 are made of aluminium, the base 2 and the front wall 4 are made of steel, and the rear wall 5 is made partly of aluminium and partly of steel. In particular, the supporting structure 13 is made of steel and the mobile structure 14 of aluminium.

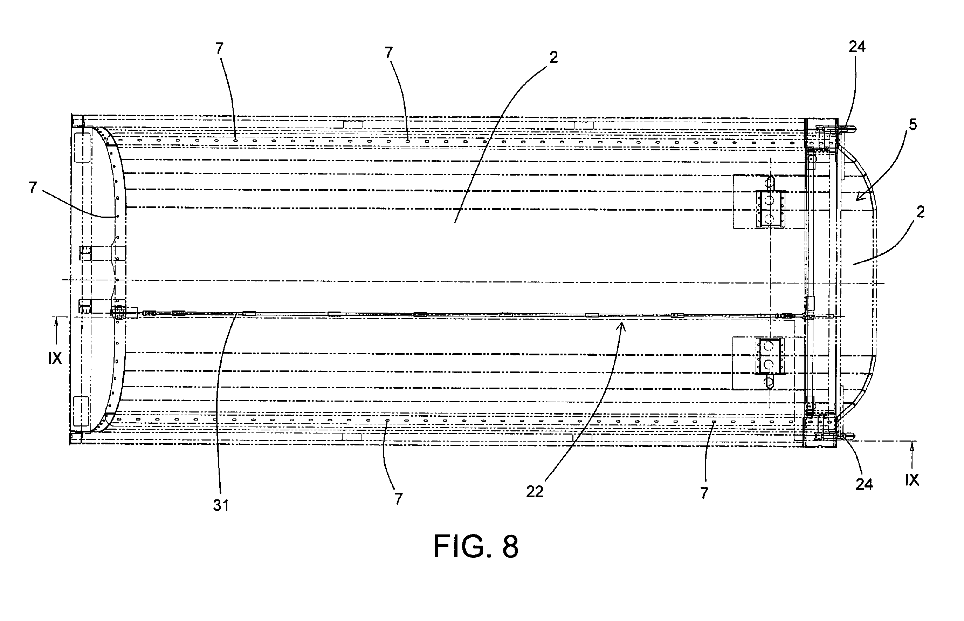

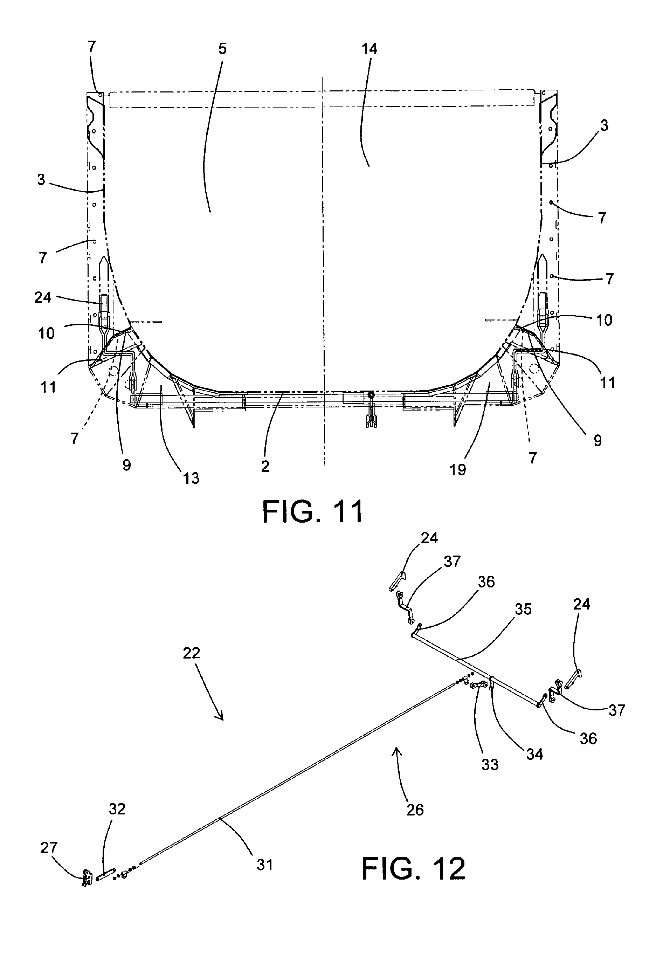

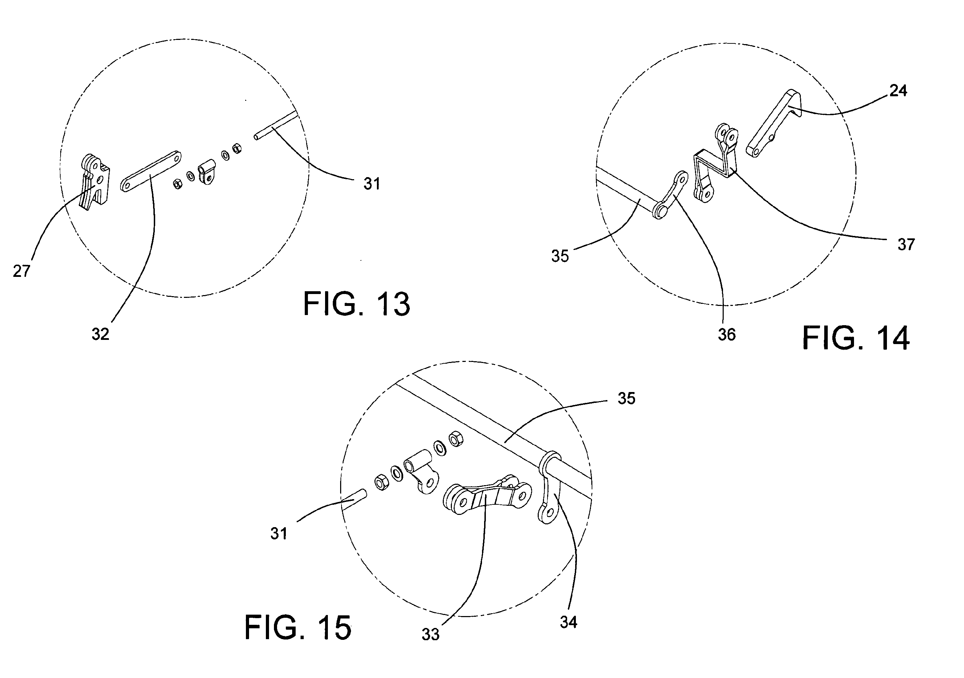

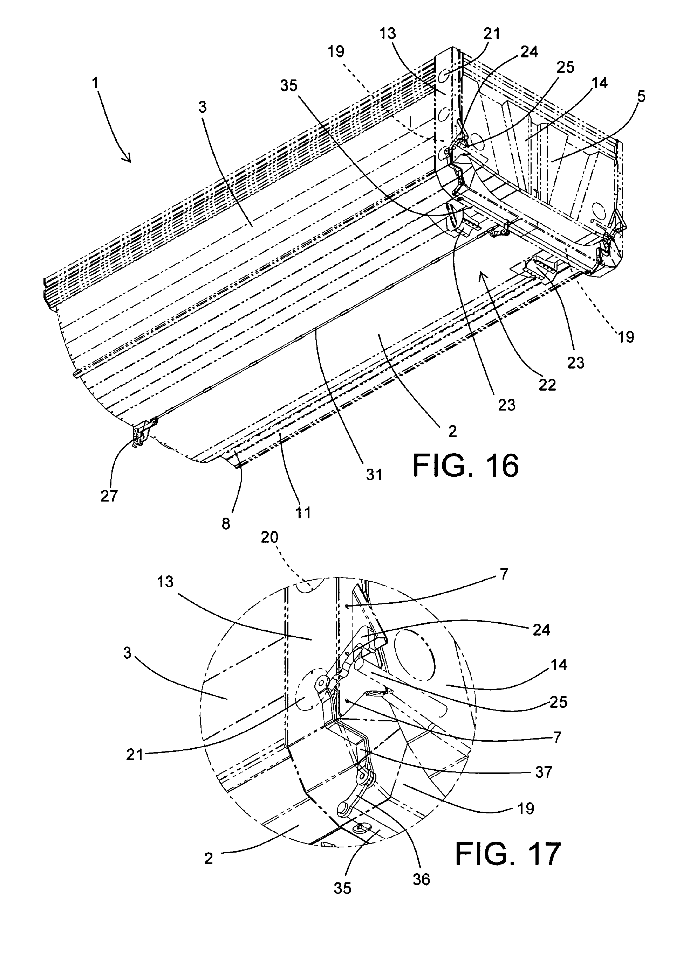

Figures 7 to 19 illustrate a dump body 1 made in accordance with the present invention, with selective locking means 22 connected to the supporting structure 13 to enable and inhibit upon command rotation of the mobile structure 14 relative to the supporting structure 13.

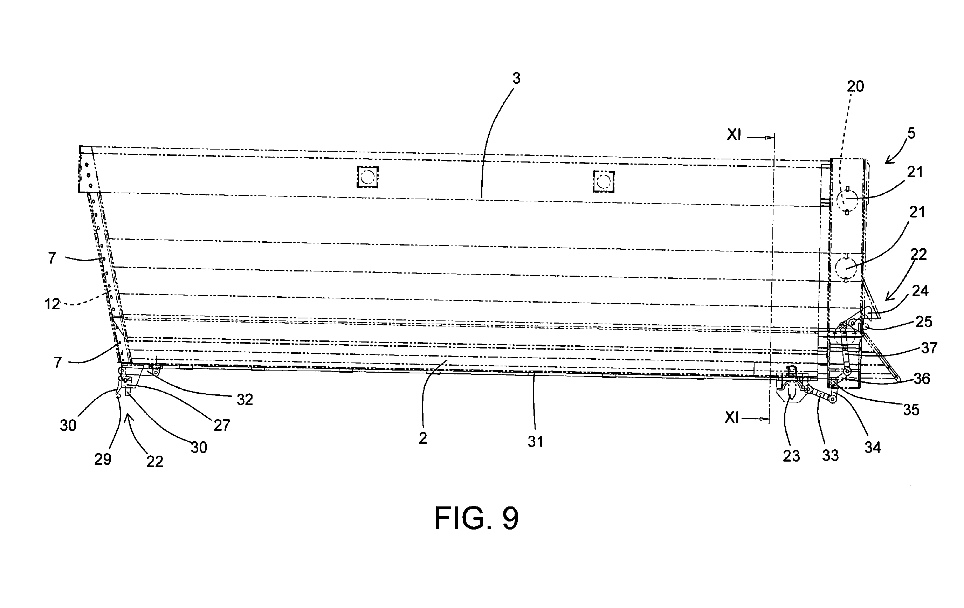

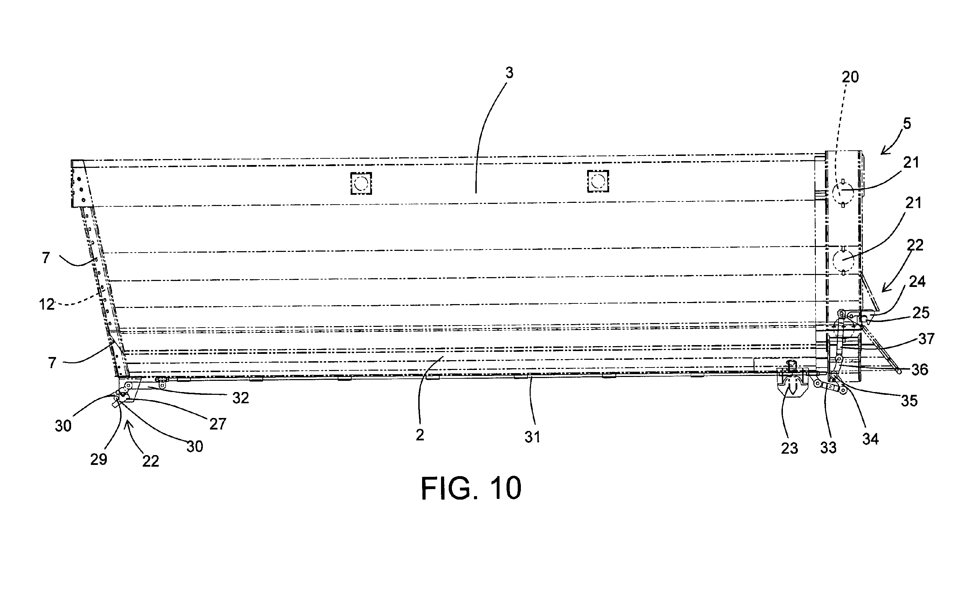

The body 1 is mobile relative to the industrial vehicle chassis on which it is mounted (not illustrated), from a home position in which it is substantially resting on the chassis (Figure 10) to an operating position in which it is at an angle to the chassis (Figure 9).

To allow rotation of the body 1 relative to the vehicle chassis, the base 2 of the body 1 has two shaped seats 23.

In the embodiment illustrated, the selective locking means 22, mechanically controlled according to the position of the body 1, are at least partly inserted in the compartment 19.

The selective locking means 22 comprise at least one hook 24 (two parallel hooks in the accompanying drawings) mobile between a first position in which it is coupled to a pin 25 integral with the mobile structure 14 of the rear wall 5 (Figure 10), inhibiting movement of the mobile structure 14, and a second position in which it is disengaged from the pin 25 and leaves the mobile structure 14 free to rotate (Figure 9).

The selective locking means 22 also comprise a hook 24 mechanical drive device 26, which comprises a mechanical element 27 for detecting the position of the body 1, and mechanical transmission means connected between the detector element 27 and the hook 24, for moving the hook 24 according to the position assumed by the detector element 27.

The detector element 27 is located close to the front of the body 1, and can be moved, following movement of the body 1, according to the methods described below, between a first position which it assumes when the body 1 is in the home position, and a second position which it assumes when the body 1 is in the operating position.

The mechanical transmission means move the hook 24 to its first position when the detector element 27 is in the respective first position (Figure 10), and to its second position when the detector element 27 is in its respective second position (Figure 9).

In the embodiment illustrated, the detector element 27 comprises a U-shaped element pivoting at the body 1 and can engage with a reference bar 29 integral with the industrial vehicle on which the body 1 is mounted (when the body 1 is in the home position).

Consequently, in the embodiment illustrated, when the U-shaped detector element 27 is in the first position its arms 30 are along a direction whose main component is substantially parallel with the base 2 of the body 1 (in particular forwards in the accompanying drawings).

Instead, when the U-shaped detector element 27 is in the second position its arms 30 are mainly along a direction perpendicular to the base 2 of the body 1 (downwards in the accompanying drawings).

In the embodiment illustrated, the mechanical transmission means comprise a first rod 31 slidably connected to the base 2 of the body 1, whose front end pivots at a first bar 32 in turn pivoting at the detector element 27 on the opposite side to that on which the detector element 27 pivots at the body 1, relative to the arms 30.

The rear end of the first rod 31 pivots at a second bar 33 in turn pivoting at a first connecting element 34 rigidly mounted cantilever style on a second transversal rod 35 inserted in the compartment 19.

The two ends of the second rod 35 are in turn rigidly connected to two second cantilever connecting elements 36, the outer end of each pivoting at a third shaped bar 37, the other end of which pivots at the hooks 24. The latter in turn pivot at the supporting structure 13 at their intermediate portion between the pivoting point at the third bar 37 and the zone for engagement with the pin 25 integral with the mobile structure 14.

Operation of the body 1 is usually similar to that of any conventional body 1.

As for operation of the locking means 22, when the body 1 is in the home position (Figure 10) the detector element 27 is in its first position and, as a result, the first rod 31 is moved towards the rear part of the body 1 and the hook 24 is coupled to the pin 25.

As soon as the body 1 begins to rise (Figure 9) the reference bar 29 integral with the vehicle chassis makes contact with the arm 30 of the detector element 27 located under it and causes the detector element 27 to rotate from the first to the second position.

This rotation causes the first rod 31 to move forwards, in turn causing rotation of the second rod 35, lowering the third bar 37 and releasing the hook 24.

Similarly, when the body 1 descends again, the reference bar 29 makes contact with the upper arm 30 of the detector element 27 and causes the latter and, as a result, the hooks to rotate in the opposite direction.

The present invention brings important advantages.

Firstly, the body for industrial vehicles disclosed may be transported in a condition with reduced dimensions, since each of the main parts may be transported detached from the others. In this way, a certain number of bodies may be transported with just two lorries, because for example all of the bases may be loaded one on top of another on one lorry, and all of the walls may be loaded side by side on the other lorry.

Moreover, the body can easily be assembled directly by the fitter, since the individual parts need only be placed alongside one another and fixed with the through-bolts. Therefore, no special tools are needed and the operators assembling the bodies do not require special skills (unlike the case for conventional bodies, requiring an expert welder).

Secondly, as indicated, thanks to the present invention it is possible to provide bodies in which the individual parts consist of different materials, so as to reduce the overall weight of the body compared with conventional bodies, at the same time guaranteeing mechanical strength equal to that of conventional bodies.

Moreover, connection using bolts or the like makes the body as a whole more elastic and therefore more resistant to stresses. In contrast, in conventional bodies the localised concentration of stresses may cause break points in the welds.

Another advantage of the body disclosed is the simplicity of repairs. If one or more of the main parts are damaged, the bolts can simply be taken out and the damaged part substituted or repaired, then easily refitted thanks to the bolts. In contrast, in conventional bodies the damaged parts must be removed by cutting the entire weld bead surrounding them, which must then be renewed during reassembly. Consequently, at present the body always needs repainting, since breaking and renewing the weld compromise the original paint work.

It should also be noticed that use of the locking means described above allows a significant improvement in the body also relative to closing of the rear wall.

At present, bodies are closed at the rear using hooks which in most cases are driven by hydraulic actuators.

Obviously, such a solution is expensive both during initial installation and during maintenance.

Alternatively, mechanical hook opening solutions are known, although these have the disadvantage of only opening the hooks when the body is at a considerable angle. Consequently, as soon as the hooks open the entire load tends to exit the body in a block.

It should also be noticed that the present invention is relatively easy to produce and that even the cost of implementing the invention is low. The invention described may be subject to modifications and variations without thereby departing from the scope of the inventive concept.

All of the details of the invention may be substituted with other technically equivalent elements and in practice all of the materials used, as well as the shapes and dimensions of the various components may be any, according to requirements.

## Claims

1. A body for industrial vehicles comprising at least five main parts: a base (2), two side walls (3), a front wall (4) and a rear wall (5) forming a body (1) internal volume (6); **characterised in that** at least two of the main parts are connected to one another by screw in fixing means.

2. The body for industrial vehicles according to claim 1, **characterised in that** the base (2) is connected to each side wall (3) by through-bolts.

3. The body for industrial vehicles according to claim 2, **characterised in that** the base (2) has, at each side wall (3), a first flange (8) extending towards the outside of the body (1) and also **characterised in that** each side wall (3) has, at its lower portion connected to the base (2), a second flange (9) extending towards the outside of the body (1) and at least partly shaped to match the first flange (8), each second flange (9) being connected to a first flange (8) by through-bolts.

4. The body for industrial vehicles according to claim 3, **characterised in that** the second flange (9) has, towards the outside of the body (1), a first section (10) shaped to match the first flange (8) and a second section (11) extending cantilever style from the first section (10).

5. The body for industrial vehicles according to any of the foregoing claims, **characterised in that** the rear wall (5) comprises a supporting structure (13) and a mobile structure (14) pivoting relative to the supporting structure (13) and able to move between a first position in which it closes the rear wall (5) and a second position in which it allows material to pass through the rear wall (5).

6. The body for industrial vehicles according to claim 5, **characterised in that** the supporting structure (13) is U-shaped, the bottom of the latter being connected to the base (2) and the sides to the side walls (3).

7. The body for industrial vehicles according to claim 6, **characterised in that**, at the supporting structure (13), each side wall (3) has a seat (16) for holding the supporting structure (13).

8. The body for industrial vehicles according to claim 7, **characterised in that** the seat (16) comprises a front flange (17) and a rear flange (18), both integral with the side wall (3) and extending transversally to the main direction of extension of said side wall (3), the supporting structure (13) being at least partly inserted between the front flange (17) and the rear flange (18).

9. The body for industrial vehicles according to claim 7 or 8, **characterised in that** the seat (16) is made on the outside of the side wall (3) which in turn forms part of the seat (16).

10. The body for industrial vehicles according to claim 6, 7, 8 or 9, **characterised in that**, at least at the side walls (3) to which it is connected, the U-shaped supporting structure (13) mainly extends on the outside of the side walls (3).

11. The body for industrial vehicles according to claim 7 or 8, **characterised in that** the seat (16) is made on the inside of the side wall (3) which in turn forms part of the seat (16).

12. The body for industrial vehicles according to claim 6 or 7, **characterised in that**, at the base (2), the U-shaped supporting structure (13) extends at least mainly under the base (2).

13. The body for industrial vehicles according to any of the claims from 5 to 12, **characterised in that** the supporting structure (13) delimits a compartment (19) inside it.

14. The body for industrial vehicles according to claim 13, **characterised in that** the supporting structure (13) also has one or more openings (20) providing access to the compartment (19), the openings being open or protected by a covering element (21).

15. The body for industrial vehicles according to claim 13 or 14, **characterised in that** the compartment (19) is also delimited by the side walls (3).

16. The body for industrial vehicles according to claim 13, 14 or 15, **characterised in that** the compartment (19) is also delimited by the base (2).

17. The body for industrial vehicles according to any of the foregoing claims, **characterised in that**, at the base (2) and the side walls (3), the front wall (4) has on a side facing the outside of the body, at least one peripheral flange (12) substantially shaped to match the profile of the side walls (3) and of the base (2), the front wall (4) being fixed to the side walls (3) and to the base (2) by a plurality of through-bolts extending through the peripheral flange (12) and through the side walls (3) and the base (2) .

18. The body for industrial vehicles according to any of the foregoing claims, **characterised in that** all of the main parts are connected to one another by screw in fixing means.

19. The body for industrial vehicles according to any of the foregoing claims, **characterised in that** the screw in fixing means consist of a plurality of through-bolts.

20. The body for industrial vehicles according to any of the foregoing claims, **characterised in that** the through-bolts are all located completely outside the body (1) internal volume (6).

21. The body for industrial vehicles according to any of the foregoing claims, **characterised in that** the side walls (3) mainly consist of a single shaped plate.

22. The body for industrial vehicles according to claim 5, also comprising selective locking means (22) connected to the supporting structure (13) for enabling and inhibiting, on command, rotation of the mobile structure (14) relative to the supporting structure (13).

23. The body for industrial vehicles according to any of the claims from 13 to 16, **characterised in that** the selective locking means (22) are at least partly inserted in the compartment (19).

24. The body for industrial vehicles according to any of the foregoing claims, **characterised in that** it is a dump body (1) mobile relative to the chassis of an industrial vehicle on which it is mounted, from a home position in which it is substantially resting on the chassis to an operating position in which it is at an angle to the chassis.

25. The body for industrial vehicles according to claims 23 and 24, **characterised in that** the selective locking means (22) are mechanically controlled according to the position of the body (1) .

26. The body for industrial vehicles according to claim 25, **characterised in that** the selective locking means (22) comprise at least one hook (24) mobile between a position in which it couples to a pin (25) integral with the mobile structure (14) of the rear wall (5), inhibiting movement of the mobile structure (14), and a second position in which it is disengaged from the pin (25), leaving the mobile structure (14) free to rotate.

27. The body for industrial vehicles according to claim 26, **characterised in that** the selective locking means (22) also comprise a hook (24) mechanical drive device, said mechanical device (26) comprising a mechanical element (27) for detecting the position of the body (1) located close to the front part of the body and being able to move, following movement of the body (1), between a first position and a second position, and mechanical drive means being connected between the detector element (27) and the hook (24), so as to move the hook (24) to its first position when the detector element (27) is in its respective first position, and to its second position when the detector element (27) is in its respective second position, the detector element (27) being in the first position when the body (1) is in the home position, and in the second position when the body (1) is in the operating position.

28. The body for industrial vehicles according to claim 27, **characterised in that** the detector element (27) comprises a U-shaped element pivoting at the body (1) and able to engage with a reference bar (29) integral with the industrial vehicle on which the body (1) is mounted, when the body (1) is in the home position.

29. The body for industrial vehicles according to claim 28, **characterised in that** when the U-shaped detector element (27) is in the first position the arms (30) of the U are mainly along a direction parallel with the base (2) of the body (1), and also being **characterised in that** when the U-shaped detector element (27) is in the second position the arms (30) of the U are mainly along a direction perpendicular to the base (2) of the body (1).

30. The body for industrial vehicles according to any of the foregoing claims, **characterised in that** the side walls (3) are made of aluminium.

31. The body for industrial vehicles according to any of the foregoing claims, **characterised in that** the base (2) and the front wall (4) are made of steel.

32. The body for industrial vehicles according to claim 6 and any of the other claims, **characterised in that** the supporting structure (13) is made of steel and the mobile structure (14) is made of aluminium.
